(19) Europäisches Patentamt
European Patent Office
Office européen des brevets

(11) **EP 4 421 212 A1**

(12) **EUROPEAN PATENT APPLICATION**
published in accordance with Art. 153(4) EPC

(43) Date of publication:
**28.08.2024 Bulletin 2024/35**

(21) Application number: **22883550.0**

(22) Date of filing: **18.10.2022**

(51) International Patent Classification (IPC):
***C25B 9/23*** (2021.01) ***C02F 1/461*** (2023.01)
***C25B 1/04*** (2021.01) ***C25B 9/00*** (2021.01)
***C25B 11/032*** (2021.01) ***C25B 11/043*** (2021.01)
***C25B 11/046*** (2021.01) ***C25B 11/052*** (2021.01)
***C25B 11/061*** (2021.01) ***C25B 11/063*** (2021.01)
***C25B 11/081*** (2021.01) ***C25B 13/02*** (2006.01)
***C25B 13/08*** (2006.01) ***H01M 4/86*** (2006.01)
***H01M 4/96*** (2006.01) ***H01M 8/0656*** (2016.01)
***H01M 8/10*** (2016.01) ***H01M 8/1004*** (2016.01)
***H01M 8/1058*** (2016.01)

(52) Cooperative Patent Classification (CPC):
**C02F 1/461; C25B 1/04; C25B 9/00; C25B 9/23; C25B 11/032; C25B 11/043; C25B 11/046; C25B 11/052; C25B 11/061; C25B 11/063; C25B 11/081; C25B 13/02; C25B 13/08; H01M 4/86; H01M 4/96;** (Cont.)

(86) International application number:
**PCT/JP2022/038692**

(87) International publication number:
**WO 2023/068246 (27.04.2023 Gazette 2023/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.10.2021 JP 2021171480**
**20.10.2021 JP 2021171481**

(71) Applicant: **Toray Industries, Inc.**
**Tokyo 103-8666 (JP)**

(72) Inventors:
- **MINAMIBAYASHI, Kenta**
  **Otsu-shi, Shiga 520-8558 (JP)**
- **IZUHARA, Daisuke**
  **Otsu-shi, Shiga 520-8558 (JP)**
- **KONISHI, Takashi**
  **Otsu-shi, Shiga 520-8558 (JP)**
- **SHIRAI, Shusuke**
  **Otsu-shi, Shiga 520-8558 (JP)**

(74) Representative: **Hoefer & Partner Patentanwälte mbB**
**Pilgersheimer Straße 20**
**81543 München (DE)**

(54) **MEMBRANE ELECTRODE ASSEMBLY, AND WATER ELECTROLYSIS DEVICE**

(57) An object of the present invention is to provide an electrode assembly in which an electrolyte membrane is kept from being deteriorated with durability improved. The present invention provides a membrane electrode assembly including an anode electrode on one surface of an electrolyte membrane and a cathode electrode on the other surface thereof, characterized in that the anode electrode includes a porous substrate (A), the cathode electrode includes a porous substrate (B), and the porous substrate (A) and the porous substrate (B) has a total thickness more than 1,000 μm.

FIG. 1

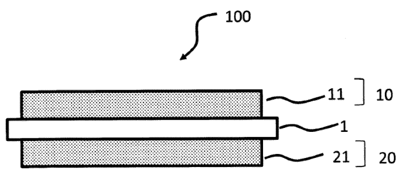


EP 4 421 212 A1

(52) Cooperative Patent Classification (CPC): (Cont.)
**H01M 8/0656; H01M 8/10; H01M 8/1004;**
**H01M 8/1058;** Y02E 60/36; Y02E 60/50

## Description

TECHNICAL FIELD

The present invention relates to a membrane electrode assembly and a water electrolyzer.

BACKGROUND ART

In the field of electrochemistry such as a fuel cell and a water electrolyzer, a so-called membrane electrode assembly (MEA) that has an anode electrode and a cathode electrode disposed respectively on both surfaces of an electrolyte membrane is typically used.

In cells that are used for fuel cells or water electrolyzers, flow path forming components for circulating water and gas are typically disposed. The flow path forming component is a separator with a groove formed, and can be a porous component disposed in an electrode. For example, for water electrolyzers, it is known that reticular metal components such as a metal mesh or an expanded metal are used for providing, in electrodes, flow paths for circulating water as a raw material, and oxygen gas or hydrogen gas generated by electrolysis (see, for example, Patent Documents 1 to 2).

The patent documents mentioned above disclose providing a carbon porous layer, a titanium fiber sintered layer, or a titanium powder sintered part as a porous substrate between a reticular metal component such as a metal mesh or an expanded metal and an electrolyte membrane.

PRIOR ART DOCUMENT

PATENT DOCUMENTS

Patent Document 1: Japanese Patent Laid-open Publication No. 11-256380
Patent Document 2: Japanese Patent Laid-open Publication No. 2001-279479

SUMMARY OF THE INVENTION

PROBLEMS TO BE SOLVED BY THE INVENTION

It has been found, however, that when the flow path forming component is disposed in the cell, the electrolyte membrane constituting the membrane electrode assembly is prone to be deteriorated.

Thus, an object of the present invention is to provide a membrane electrode assembly in which an electrolyte membrane is kept from being deteriorated with durability improved.

SOLUTIONS TO THE PROBLEMS

The present inventors have found that the above-mentioned problem in the prior art is caused by the fact that a relatively high pressure is locally applied to the electrolyte membrane due to the surface irregularity shape of the flow path forming component, thereby making the present invention.

More specifically, the present invention provides a membrane electrode assembly including an anode electrode on one surface of an electrolyte membrane and a cathode electrode on the other surface thereof, characterized in that the anode electrode includes a porous substrate (A), the cathode electrode includes a porous substrate (B), and the porous substrate (A) and the porous substrate (B) has a total thickness more than 1,000 $\mu$m.

In addition, the present invention provides a water electrolyzer including the membrane electrode assembly according to the present invention.

EFFECTS OF THE INVENTION

According to the present invention, a membrane electrode assembly can be provided, in which an electrolyte membrane is kept from being deteriorated with durability improved, because no high pressure is locally applied to the electrolyte membrane.

BRIEF DESCRIPTION OF THE DRAWINGS

Fig. 1 is a schematic cross-sectional view in one form of a membrane electrode assembly according to the present invention.
Fig. 2 is a schematic cross-sectional view in one form of a membrane electrode assembly according to the present invention.
Fig. 3 is a schematic cross-sectional view in one form of a membrane electrode assembly according to the present invention.
Fig. 4 is a schematic cross-sectional view in one form of a membrane electrode assembly according to the present invention.
Fig. 5 is a schematic plan view for explaining the count of expanded metal.

EMBODIMENTS OF THE INVENTION

Hereinafter, embodiments of the present invention will be described in detail. However, the present invention is not limited to only the following embodiments, and various modifications can be made depending on purposes and applications.

A membrane electrode assembly according to an embodiment of the present invention includes an anode electrode on one surface of an electrolyte membrane and a cathode electrode on the other surface thereof, the anode electrode includes a porous substrate (A), the cathode electrode includes a porous substrate (B), and the porous substrate (A) and the porous substrate (B) has a total thickness more than 1,000 μm.

In the prior art, the electrolyte membrane is believed to be deteriorated because a relatively high pressure is locally applied to the electrolyte membrane due to the surface irregularity shape of the flow path forming component. The mechanism by which the electrolyte membrane is deteriorated is not clear, but is presumed as follows. When a high pressure is locally applied to the electrolyte membrane on the anode side, the region will have a high potential, thereby generating heat and then deteriorating the electrolyte membrane. In contrast, when a high pressure is locally applied to the electrolyte membrane on the cathode side, the current will be deficient in the low pressure region between the high pressure region and the high pressure region, thereby decreasing the hydrogen generation efficiency, and as a result, the by-production of hydrogen peroxide by the reaction between hydrogen and oxygen will be promoted, and the hydrogen peroxide will deteriorate the electrolyte membrane.

In the electrode assembly according to the embodiment of the present invention, because the relatively thick porous substrates are used, a high pressure is considered kept from being locally applied to the electrolyte membrane, as a result, keeping the electrolyte membrane from being deteriorated.

In addition, the electrode assembly according to the embodiment of the present invention also produces the effect of being excellent in water electrolysis performance. The water electrolysis performance in a water electrolyzer is better as the initial applied voltage to a cell is lower. When a high pressure is locally applied to the electrolyte membrane on the anode side as in the prior art, the electrolytic reaction may be insufficiently developed in the low pressure region between the high pressure region and the high pressure region. The thus reduced electrolysis region in the electrolyte membrane may increase the current density when the same current is allowed to flow, thus increasing the electrolysis voltage. This means that water electrolysis performance is degraded. In the electrode assembly according to the embodiment of the present invention, a high pressure is kept from being locally applied to the electrolyte membrane, thus keeping the water electrolysis performance from being degraded as mentioned above.

The configuration of the membrane electrode assembly according to the embodiment of the present invention will be specifically described with reference to the drawings. A membrane electrode assembly 100 shown in Fig. 1 has a configuration where an anode electrode 10 including a porous substrate (A) 11 is stacked on one surface of an electrolyte membrane 1, whereas a cathode electrode 20 including a porous substrate (B) 21 is stacked on the other surface thereof. The porous substrate (A) and the porous substrate (B) preferably function as gas diffusion layers.

Although not shown, an anode catalyst layer is present between electrolyte membrane 1 and porous substrate (A) 11. In addition, although not shown, a cathode catalyst layer is present between electrolyte membrane 1 and porous substrate (B) 21. These catalyst layers may be stacked respectively on the porous substrate (A) and the porous substrate (B), or may be stacked on the electrolyte membrane. Details of the catalyst layer will be described later.

In the form of Fig. 1, a flow path of water/gas is preferably formed in a separator or the electrode. As the separator, a separator with a flow path groove is used. The form of the flow path formed in the electrode will be described below.

For the membrane electrode assembly according to the embodiment of the present invention, the anode electrode and the cathode electrode each include a water/gas flow path forming component. Examples of the flow path

forming component include a reticular component and a non-reticular porous component. While a form of the anode electrode and the cathode electrode each including a water/gas flow path forming component will be specifically described below, the present invention is not limited only thereto.

For a membrane electrode assembly 200 shown in Fig. 2, an anode electrode 10 has a porous substrate (A) 11 and a reticular component 12 in order from the side of an electrolyte membrane 1, and a cathode electrode 20 has a porous substrate (B) 21 and a reticular component 22 in order from the side of the electrolyte membrane 1.

For a membrane electrode assembly 300 shown in Fig. 3, an anode electrode 10 has a porous substrate (A) 11 and a reticular component 12 in order from the side of an electrolyte membrane 1, and a cathode electrode 20 has a porous substrate (B) 21 and a non-reticular porous component 23 in order from the side of the electrolyte membrane 1.

For a membrane electrode assembly 400 shown in Fig. 4, an anode electrode 10 has a porous substrate (A) 11 and a non-reticular porous component 13 in order from the side of an electrolyte membrane 1, and a cathode electrode 20 has a porous substrate (B) 21 and a reticular component 22 in order from the side of the electrolyte membrane 1.

In this regard, the non-reticular porous component means a component that is different in shape from the reticular component. Details of a non-reticular porous metal component will be described later.

Among the forms mentioned above, the configuration is preferred in which the anode electrode and the cathode electrode both have the reticular components.

[Porous Substrate (A)]

The thickness of the porous substrate (A) is preferably more than 400 μm, more preferably more than 500 μm, still more preferably more than 600 μm, and particularly preferably more than 700 um from the viewpoint of keeping the electrolyte membrane from being deteriorated. In addition, the thickness is preferably 2,000 um or less, more preferably 1,700 um or less, particularly preferably 1,300 um or less from the viewpoint of maintaining favorable conductivity.

Examples of the porous substrate (A) include a metal porous substrate and a carbon porous substrate. Examples of the metal porous substrate include a metal nonwoven fabric, a metal fiber sintered body, a metal powder sintered body, a metal foam sintered body, and a fine mesh-like woven fabric of metal fibers, and examples of the carbon porous substrate include carbon felt, carbon paper, carbon cloth, and a graphite particle sintered body. The mesh count of the fine mesh-like woven fabric of metal fibers is preferably 220 or more, more preferably 250 or more, particularly preferably 300 or more.

When the membrane electrode assembly according to the embodiment of the present invention is applied to, for example, a water electrolyzer, a metal porous substrate, which is excellent in corrosion resistance under environments such as at a high potential, in the presence of oxygen, and in strong acidity, is preferably used as the porous substrate (A) constituting the anode electrode. As the metal constituting the metal porous substrate, from the viewpoint mentioned above, titanium, aluminum, nickel, stainless steel, and an alloy containing at least one of these metals as a main constituent are preferred, and titanium and an alloy containing titanium as a main constituent (hereinafter referred to as a "titanium alloy") are particularly preferred. Examples of the other metal contained in, for example, the titanium alloy include aluminum, vanadium, palladium, molybdenum, chromium, and niobium. The metal porous substrates are, for enhancing the conductivity thereof, preferably coated with a noble metal such as gold or platinum by plating or the like.

The porous substrate (A) preferably functions as a gas diffusion layer, and from this viewpoint, the average pore size of the porous substrate (A) is preferably 0.1 to 70 μm, more preferably 1 to 60 μm, particularly preferably 2 to 50 μm.

[Porous Substrate (B)]

The thickness of the porous substrate (B) is preferably more than 500 μm, more preferably more than 600 μm, still more preferably more than 750 μm, still more preferably more than 1,000 μm, and still more preferably more than 1,100 um from the viewpoint of keeping the electrolyte membrane from being deteriorated. In addition, the thickness is preferably 2,500 um or less, more preferably 2,000 um or less, particularly preferably 1,700 um or less from the viewpoint of maintaining favorable conductivity.

Examples of the porous substrate (B) include a metal porous substrate and a carbon porous substrate. Examples of the metal porous substrate include a metal nonwoven fabric, a metal fiber sintered body, a metal powder sintered body, a metal foam sintered body, and a fine mesh-like woven fabric of metal fibers, and examples of the carbon porous substrate include carbon felt, carbon paper, carbon cloth, and a graphite particle sintered body. As the porous substrate (B), from the viewpoints of material cost and conductivity, a carbon porous substrate is preferred, and carbon paper is particularly preferred.

The porous substrate (B) preferably functions as a gas diffusion layer, and from this viewpoint, the average pore size of the porous substrate (B) is preferably 0.1 to 70 μm, more preferably 1 to 60 μm, particularly preferably 2 to 50 μm.

In the membrane electrode assembly according to the embodiment of the present invention, the porous substrate (A) constituting the anode electrode is preferably a metal porous substrate, and the porous substrate (B) constituting the cathode electrode is preferably a carbon porous substrate. In this case, from the viewpoints such as the hardness, conductivity, and material cost of the porous substrate, the thickness of the porous substrate (B) including the carbon porous substrate is preferably larger than the thickness of the porous substrate (A) including the metal porous substrate.
For sufficiently achieving the effect of the present invention, the total thickness of the porous substrate (A) and the porous substrate (B) is preferably more than 1,100 um, more preferably more than 1,300 μm, still more preferably more than 1,500 um, particularly preferably more than 1,700 um. The total thickness is preferably 4,000 um or less, more preferably 3,400 um or less, particularly preferably 2,500 um or less.

[Reticular Component]

The reticular component preferably has conductivity, and the material thereof is preferably a metal. In addition, the reticular component is preferably made of a metal from the viewpoint of durability and securement of a water/gas flow path. More specifically, the reticular component is preferably a reticular metal component.
Examples of the metal constituting the reticular metal component include titanium, nickel, aluminum, stainless steel, and an alloy containing at least one of these metals as a main constituent. In addition, for enhancing the conductivity of the reticular metal component, the reticular metal component is preferably coated with a noble metal such as gold or platinum by plating or the like.
As the metal constituting the reticular metal component used for the anode electrode, titanium, nickel, aluminum, and an alloy containing at least one of these metals as a main constituent, which are excellent in corrosion resistance under environments such as at a high potential, in the presence of oxygen, and in strong acidity, are preferred, and titanium and a titanium alloy are particularly preferred.
The metal constituting the reticular metal component used for the cathode electrode is not particularly limited, but titanium, nickel, aluminum, stainless steel, and alloys containing these metals as main constituents are preferred, and titanium and a titanium alloy are particularly preferred.
As a material other than the metal for the reticular component, for example, conductive non-metallic materials such as carbon fibers or conductive resins can be used. In addition, a non-metallic material such as a nonconductive resin, coated with a noble metal such as gold or platinum, can also be used.
Hereinafter, a reticular metal component will be described as a representative example of the reticular component, but the present invention is not limited thereto.
Examples of the reticular metal component include a metal mesh, an expanded metal, and a punching metal. Among these examples, a metal mesh or expanded metal is preferably used. The metal mesh, the expanded metal, and the punching metal can be used as a single sheet or a laminate of multiple sheets. The laminate may be a laminate of different types, for example, a laminate of a metal mesh and an expanded metal.
The mesh count of the reticular metal component is preferably 10 or more, more preferably 23 or more, particularly preferably 25 or more. The use of such a reticular metal component tends to reduce the local application of a high pressure to the electrolyte membrane, and keep the electrolyte membrane from being deteriorated. On the other hand, the mesh count is preferably 200 or less, more preferably 150 or less, still more preferably 100 or less, particularly preferably 70 or less from the viewpoint of securing a water/gas flow path. The mesh count is the number of openings in 1 inch (25.4 mm), and can be determined from the opening size (mm) and the wire diameter (mm) by the following formula:

$$\text{Mesh Count} = 25.4/(\text{opening size} + \text{wire diameter})$$

Further, the expanded metal is processed into a rhombic or tortoiseshell reticular shape by a method of stretching a metal material with staggered cuts. The mesh count of such an expanded metal is, as shown in Fig. 5, the number of openings within 1 inch (25.4 mm) of a reference line L drawn in parallel with any one side of the opening (rhombus), and can be determined by the formula mentioned above. In this regard, the dimension M is (opening size + wire diameter) in the formula mentioned above.
The reticular metal component may be obtained by laminating multiple reticular metal sheets that are different in mesh count. For the laminated configuration, it is preferable to dispose the reticular metal sheet with the largest mesh count on each of the sides of the porous substrate (A) and porous substrate (B). In the case of laminating three or more reticular metal sheets, the mesh count is preferably gradually reduced in order from the sides of the porous substrate (A) and porous substrate (B). The laminated configuration mentioned above tends to reduce the local application of a high pressure to the electrolyte membrane, and keep the electrolyte membrane from being deteriorated.

The mesh count of each of the multiple reticular metal sheets used in this laminated configuration is preferably appropriately adjusted within the range of 10 to 200, and preferably appropriately adjusted within the range of 10 to 150. Specifically, it is preferable to dispose the reticular metal sheet with a mesh count of 30 or more and 200 or less (preferably 150 or less) at positions closest to the porous substrate (A) and the porous substrate (B), and dispose the reticular metal sheet with a mesh count of 10 or more and less than 30 at positions farthest from the porous substrate (A) and the porous substrate (B).

[Non-reticular Porous Component]

The material of the non-reticular porous component is not particularly limited, but a metal is preferred from the viewpoints of conductivity and flow path formation. More specifically, a non-reticular porous metal component is preferred as the non-reticular porous component. Hereinafter, a non-reticular porous metal component will be described as a representative example of the non-reticular porous component, but the present invention is not limited thereto.

Examples of the non-reticular porous metal component include a metal nonwoven fabric, a metal fiber sintered body, a metal powder sintered body, and a metal foam sintered body. Examples of the metal constituting the non-reticular porous metal component include titanium, nickel, aluminum, stainless steel, and an alloy containing at least one of these metals as a main constituent, and titanium and a titanium alloy are particularly preferred. In addition, for enhancing the conductivity of the non-reticular porous metal component, the non-reticular porous metal component is preferably coated with a noble metal such as gold or platinum by plating or the like.

The non-reticular porous metal component preferably functions as a water/gas flow path forming component, and from this viewpoint, the average pore size is preferably relatively large. Specifically, the average pore size of the non-reticular porous metal component is preferably 70 to 2,000 $\mu$m, more preferably 100 to 1,000 $\mu$m, particularly preferably 150 to 800 $\mu$m.

The non-reticular porous metal component is preferably larger in average pore size than the metal porous substrate for use as the above-described porous substrate (A) and porous substrate (B).

[Electrolyte Membrane]

The electrolyte membrane for use in the membrane electrode assembly is not particularly limited, and electrolyte membranes known in the art can be used. Among the membranes, polymer electrolyte membranes are preferred. Examples of the polymer electrolytes include hydrocarbon polymer electrolytes and fluoropolymer electrolytes. In a water electrolyzer, the electrolyte membrane preferably has a high hydrogen barrier property and high water electrolysis performance, and from these viewpoints, the hydrocarbon polymer electrolytes are preferably used. These polymer electrolytes contain ionic groups such as a sulfonic acid group, a sulfonimide group, a sulfuric acid group, and a phosphonic acid group.

The fluoropolymer in the fluoropolymer electrolyte means a polymer in which most or all of hydrogen atoms in an alkyl group and/or an alkylene group in a molecule are substituted with fluorine atoms.

Examples of the fluoropolymer electrolyte include perfluorocarbon sulfonic acid polymers, perfluorocarbon phosphonic acid polymers, trifluorostyrene sulfonic acid polymers, trifluorostyrene phosphonic acid polymers, ethylene tetrafluoroethylene-g-styrene sulfonic acid polymers, ethylene-tetrafluoroethylene copolymers, and polyvinylidene fluoride-perfluorocarbon sulfonic acid polymers.

Among these examples, perfluorocarbon sulfonic acid polymers are preferred from the viewpoint of heat resistance, chemical stability, and the like, and examples of the polymers can include commercially available products such as "Nafion" (registered trademark) (manufactured by The Chemours Company), "FLEMION" (registered trademark) (manufactured by AGC Inc.), and "Aciplex" (registered trademark) (manufactured by Asahi Kasei Corporation).

The hydrocarbon polymer electrolyte is preferably an aromatic hydrocarbon polymer having an aromatic ring in the main chain. The aromatic ring may include not only a hydrocarbon aromatic ring but also a hetero ring. In addition, the polymer may be partially formed from an aliphatic unit together with the aromatic ring unit.

Specific examples of the aromatic hydrocarbon polymer include polymers having, in the main chain, a structure selected from polysulfone, polyether sulfone, a polyphenylene oxide, a polyarylene ether polymer, polyphenylene sulfide, polyphenylene sulfide sulfone, polyparaphenylene, a polyarylene polymer, polyarylene ketone, polyether ketone, a polyarylene phosphine oxide, a polyether phosphine oxide, polybenzoxazole, polybenzothiazole, polybenzimidazole, polyamide, polyimide, polyetherimide, and polyimidesulfone together with an aromatic ring. It is to be noted that the polysulfone, polyether sulfone, polyether ketone, and the like referred to herein are generic terms for structures having a sulfone bond, an ether bond, or a ketone bond in their molecular chains, and encompass polyether ketone ketone, polyether ether ketone, polyether ether ketone ketone, polyether ketone ether ketone ketone, and polyether ketone sulfone and the like. The hydrocarbon skeleton may have multiple structures among these structures. Above all, in particular, a polymer having a polyether ketone skeleton, that is, a polyether ketone polymer is most preferred for the aromatic

hydrocarbon polymer.

The ionic group may be an ionic group having either a cation exchange ability or an anion exchange ability. As such a functional group, a sulfonic acid group, a sulfonimide group, a sulfuric acid group, a phosphonic acid group, a phosphoric acid group, a carboxylic acid group, an ammonium group, a phosphonium group, and an amino group are preferably used. Above all, at least one selected from a sulfonic acid group, a sulfonimide group, and a sulfuric acid group is preferred because of the excellent water electrolysis performance, and a sulfonic acid group is most preferred from the viewpoint of raw material cost. In addition, the polymer may contain two or more types of ionic groups.

The aromatic hydrocarbon polymer is, furthermore, preferably a block copolymer having each of a segment containing an ionic group (ionic segment) and a segment containing no ionic group (nonionic segment). The segment herein represents a partial structure in a polymer chain of a copolymer, including repeating units that exhibit specific properties, with a molecular weight of 2,000 or more. The use of the block copolymer improves the water electrolysis performance, the hydrogen generation efficiency, and the physical durability.

As the block copolymer mentioned above, a polyether ketone block copolymer containing the following: an ionic segment including a constituent unit (S1) and a nonionic segment including a constituent unit (S2) is particularly preferred.

[Chemical Formula 1]

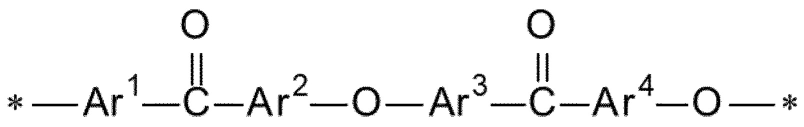 (S1)

In the general formula (S1), $Ar^1$ to $Ar^4$ each represent any divalent arylene group, $Ar^1$ and/or $Ar^2$ contains an ionic group, and $Ar^3$ and $Ar^4$ may contain an ionic group or contain no ionic group. $Ar^1$ to $Ar^4$ may be optionally substituted, and may each independently have two or more types of arylene groups. The symbol * represents a binding site to the constituent unit of the general formula (S1) or another constituent unit.

[Chemical Formula 2]

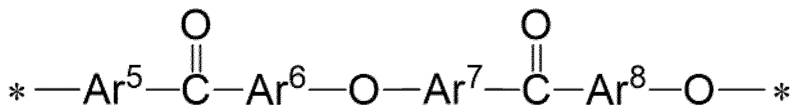 (S2)

In the general formula (S2), $Ar^5$ to $Ar^8$ each represent any divalent arylene group, and may be optionally substituted, but contain no ionic group. $Ar^5$ to $Ar^8$ may each independently have two or more types of arylene groups. The symbol * represents a binding site to the constituent unit of the general formula (S2) or another constituent unit.

In this regard, examples of the divalent arylene group preferred for $Ar^1$ to $Ar^8$ include, but are not limited thereto, hydrocarbon arylene groups such as a phenylene group, a naphthylene group, a biphenylene group, and a fluorenediyl group, and heteroarylene groups such as pyridinediyl, quinoxalinediyl, and thiophenediyl. In this regard, the "phenylene group" can be three types of phenylene groups: an o-phenylene group; a m-phenylene group; and a p-phenylene group, depending on the position of the binding site between the benzene ring and another constituent unit, and the term "phenylene group" is used as a generic term for these groups, unless otherwise particularly limited in this specification. The same applies to the other divalent arylene groups, such as the "naphthylene group" and the "biphenylene group".

$Ar^1$ to $Ar^8$ are each preferably a phenylene group, and most preferably a p-phenylene group. In addition, $Ar^5$ to $Ar^8$ may be substituted with a group other than an ionic group, but are more preferably unsubstituted groups in terms of proton conductivity, chemical stability, and physical durability.

The ion exchange capacity (IEC) of the hydrocarbon polymer electrolyte included in the electrolyte membrane preferably falls within the range of 1.5 to 2.7 meq/g, more preferably the range of 1.6 to 2.5 meq/g, particularly preferably the range of 1.7 to 2.4 meq/g. The ion exchange capacity of the hydrocarbon polymer electrolyte can be adjusted by controlling the density of ionic groups, for example, sulfonic acid groups, in the polymer.

The weight average molecular weight of the hydrocarbon polymer electrolyte is preferably 250,000 or more, more preferably 300,000 or more, particularly preferably 350,000 or more. The upper limit of the weight average molecular weight is about 1,500,000.

The electrolyte membrane can contain various additives, for example, a surfactant, a radical scavenger, a

hydrogen peroxide decomposer, a non-electrolyte polymer, an elastomer, a filler, and the like, to the extent that the present invention is not impaired.

The electrolyte membrane preferably includes a porous reinforce component in the membrane. Examples of the form of the porous reinforce component include a woven fabric, a nonwoven fabric, a porous film, and a mesh woven fabric. Examples of the material of the porous reinforce component include materials containing, as a main constituent, a hydrocarbon polymer such as polyolefin, polystyrene, polyester, polysulfone, polyether sulfone, polyether ketone, polyether ether ketone, polybenzoxazole, polybenzimidazole, or polyimide, for example, materials containing, as a main constituent, a fluoropolymer such as polytetrafluoroethylene, polyhexafluoropropylene, a tetrafluoroethylene-hexafluoropropylene copolymer, an ethylene-tetrafluoroethylene copolymer, or polyvinylidene fluoride.

Among the porous reinforce components mentioned above, the mesh woven fabric is preferred, which achieves a relatively high reinforcing effect, and polyester, liquid crystal polyester, polyphenylene sulfide, polyether ketone, polyether ether ketone, and polyether ketone ketone are preferably used as a material of fibers constituting the mesh woven fabric.

The thickness of the porous reinforce component preferably falls within the range of 10 to 50 $\mu$m, more preferably within the range of 20 to 45 $\mu$m, particularly preferably within the range of 25 to 43 $\mu$m.

The thickness of the electrolyte membrane is preferably 40 to 200 $\mu$m, more preferably 50 to 170 $\mu$m, particularly preferably 60 to 150 um from the viewpoints of hydrogen barrier property and durability.

Favorable gas barrier properties or high strength may be required for, for example, an electrolyte membrane for use in a water electrolyzer. The hydrocarbon polymer electrolyte is relatively favorable in terms of the properties mentioned above as compared with the fluoropolymer electrolyte, and from this viewpoint, an electrolyte membrane containing the hydrocarbon polymer electrolyte is preferred. In addition, an electrolyte membrane (composite electrolyte membrane) including the porous reinforce component is also effective in enhancing the membrane strength. On the other hand, the increased strength of the electrolyte membrane makes the electrolyte membrane less likely to follow irregularities of the flow path forming component, thereby leading to the problem of making the electrolyte membrane more likely to be deteriorated due to the flow path forming component as described above. Such a problem is solved by the present invention.

More specifically, with the use of, as the electrolyte membrane, an electrolyte membrane or a composite electrolyte membrane containing the hydrocarbon electrolyte, the membrane electrode assembly according to the embodiment of the present invention can enjoy the effect of the present invention, the electrolyte membrane kept from being deteriorated, while taking advantage of the electrolyte membrane.

From the viewpoint mentioned above, as the electrolyte membrane, a composite electrolyte membrane including the porous reinforce component is preferred, and a composite electrolyte membrane including the porous reinforce component and the hydrocarbon polymer electrolyte is particularly preferred. As the configuration of the composite electrolyte membrane, a configuration including a hydrocarbon polymer electrolyte layer on one or both surfaces of a composite layer including the porous reinforce component and the hydrocarbon polymer electrolyte, that is, a configuration of "hydrocarbon polymer electrolyte layer/composite layer" or a configuration of "hydrocarbon polymer electrolyte layer/composite layer/hydrocarbon polymer electrolyte layer" is preferred. In this regard, the hydrocarbon polymer electrolyte layer is a layer including a hydrocarbon polymer electrolyte without including any porous reinforce component.

The thickness ratio of the composite layer in the composite electrolyte membrane is preferably 10 to 90%, more preferably 20 to 80%, particularly preferably 30 to 70%, based on the thickness of the composite electrolyte membrane regarded as 100%. In this regard, the thickness of the composite layer means the thickness of the porous substrate. The specific thickness of the composite layer preferably falls within the range of 10 to 50 $\mu$m, more preferably the range of 20 to 45 $\mu$m, particularly preferably the range of 25 to 43 um. In addition, the thicknesses of the hydrocarbon polymer electrolyte layers are each preferably 3 um or more, more preferably 5 um or more, particularly preferably 10 um or more. In addition, the thickness of each of the hydrocarbon polymer electrolyte membranes is preferably 50 um or less, more preferably 45 um or less, particularly preferably 40 um or less.

[Catalyst Layer]

The membrane electrode assembly according to the embodiment of the present invention may have an anode catalyst layer between the porous substrate (A) constituting the anode electrode and the electrolyte membrane, and may have a cathode catalyst layer between the porous substrate (B) constituting the cathode electrode and the electrolyte membrane. These catalyst layers may be stacked respectively on the porous substrate (A) and the porous substrate (B), or may be stacked on the electrolyte membrane. The electrolyte membrane with the catalyst layers stacked thereon is referred to as a catalyst-coated electrolyte membrane (CCM).

In the present invention, it is preferable to use a catalyst-coated electrolyte membrane (CCM). The catalyst-coated electrolyte membrane (CCM) has an anode catalyst layer and a cathode catalyst layer stacked on the anode electrode side of the electrolyte membrane and on the cathode electrode side thereof.

The catalyst layer is typically a layer including catalyst particles and a polymer electrolyte. As the polymer electrolyte, the fluoropolymer electrolyte or hydrocarbon polymer electrolyte described above can be used, and the fluoropolymer electrolyte is preferred from the viewpoint of gas diffusibility.

As the catalyst particles, metals such as platinum group elements (platinum, ruthenium, rhodium, palladium, osmium, iridium), iron, lead, gold, silver, copper, chromium, cobalt, nickel, manganese, vanadium, molybdenum, gallium, and aluminum, or alloys thereof, or oxides, double oxides, and the like thereof are typically used, and carbon particles supporting the metals (catalyst supported carbon particles) and metal oxides supporting the metals (catalyst supported metal oxide particles) are also typically used. The carbon particles are not particularly limited as long as the particles have conductivity in the form of fine particles, and are not corroded or deteriorated by a reaction with the catalyst, and carbon particles such as carbon black, graphite, activated carbon, carbon fibers, carbon nanotubes, and fullerene particles can be used. The catalyst-supported metal oxide is not particularly limited as long as the oxide has conductivity in the form of fine particles, and are not corroded or deteriorated by a reaction with the catalyst, and oxides of titanium, copper, zirconium, niobium, molybdenum, indium, tin, antimony, cerium, holmium, tantalum, tungsten, bismuth, and an ITO can be used. The average particle size of the catalyst particles is preferably 0.5 nm or more and 20 nm or less, more preferably 1 nm or more and 5 nm or less.

The anode catalyst layer and the cathode catalyst layer may be made of the same material, or may be made of different materials. In the case of being applied to a water electrolyzer, the anode catalyst layer and the cathode catalyst layer are preferably made of different materials. For example, for the anode catalyst layer, it is preferable to use, as catalyst particles, a noble metal such as iridium, ruthenium, rhodium, or palladium, or an alloy, an oxide, or a double oxide thereof, or a titanium oxide supporting the noble metal, or the alloy, oxide, or double oxide thereof. Among these materials, the iridium oxide is particularly preferred from the viewpoint of water electrolysis performance. For the cathode catalyst layer, it is preferable to use platinum supported carbon particles as catalyst particles.

In the catalyst layer, the ratio by mass of the content of the catalyst particles to the content of the polymer electrolyte (the mass of the catalyst particles/the mass of the polymer electrolyte) preferably falls within the range of 1.0 to 20.0, more preferably the range of 1.5 to 18.0, still more preferably the range of 2.1 to 15.0, particularly preferably the range of 3.0 to 13.0.

The thickness of the catalyst layer preferably falls within the range of 1 to 30 μm, more preferably the range of 2 to 25 μm, particularly preferably the range of 3 to 20 um from the viewpoints of gas diffusibility and durability.

[Application Example]

The membrane electrode assembly according to the present invention can be applied to, for example, electrochemical uses. Examples of the electrochemical uses include fuel cells, redox flow cells, water electrolyzers, and electrochemical hydrogen compressors. The membrane electrode assembly is preferably applied to, among these examples, water electrolyzers, most preferably applied to water electrolysis type hydrogen generators.

In addition, the membrane electrode assembly according to the present invention may have an electrolyte membrane and electrodes joined in advance, or may have an electrolyte membrane and electrodes disposed in a cell, and then joined in a fastening step.

## EXAMPLES

Hereinafter, the present invention will be more specifically described with reference to examples, but the present invention is not limited to only these examples.

### (1) Evaluation of Membrane Electrode Assembly

Membrane electrode assemblies prepared according to examples and comparative examples were each sandwiched with the following separator 1 or 2, and set in a JARI standard cell ("Ex-1" manufactured by Eiwa Corporation, electrode area: 25 $cm^2$), the cell was fastened such that the average pressure applied to the CCM was 4 MPa, and the cell temperature was set to 80°C. While supplying deionized water with an electrical conductivity of 1 μS/cm or less to both the cathode electrode and the anode electrode at a flow rate of 0.2 L/min at atmospheric pressure, and a current of 2 $A/cm^2$ was applied to produce hydrogen gas and oxygen gas from a water electrolysis reaction. The initial applied voltage to the cell in this case was defined as water electrolysis performance. The water electrolysis performance is better as the above-mentioned initial applied voltage is lower. In addition, the increase in voltage from the initial stage in the case of continuously applying the current of 2 $A/cm^2$ for 200 hours was defined as water electrolysis durability. The water electrolysis durability is better as the increase in voltage from the initial stage is smaller.

[Separator]

- Separator 1: platinum-coated titanium flat plate
- Separator 2: platinum-coated titanium flat plate with water/gas flow path groove.

[Porous Substrate (A)]

- A1: 300 μm-thick titanium fiber sintered body plated with platinum
- A2: 550 μm-thick titanium fiber sintered body plated with platinum
- A3: 750 μm-thick titanium fiber sintered body plated with platinum

[Porous Substrate (B)]

- B1: 370 μm-thick carbon paper
- B2: 560 μm-thick carbon paper
- B3: 820 μm-thick carbon paper
- B4: 1,350 μm-thick carbon paper

[Reticular Metal Component]

- M1: platinum-plated titanium expanded metal: mesh count: 25, thickness: 1.2 mm
- M2: platinum-plated titanium expanded metal: mesh count: 60, thickness: 1.2 mm

[Electrolyte Membrane]

- P1: electrolyte membrane including fluoropolymer electrolyte ("Nafion" (registered trademark) manufactured by The Chemours Company, product number: N 115, thickness: 125 μm)
- P2: electrolyte membrane including hydrocarbon polymer electrolyte
- P3: composite electrolyte membrane including porous reinforce component and hydrocarbon electrolyte

Methods for preparing P2 and P3 will be described below.

[Preparation of Electrolyte Membrane P2]

<Synthesis of Polyether Ketone Block Copolymer b1>

<Synthesis Example 1>

(Synthesis of 2,2-bis(4-hydroxyphenyl)-1,3-dioxolane (K-DHBP) represented by the following Formula (G1))

In a 500-mL flask equipped with a stirrer, a thermometer, and a distillation tube, 49.5 g of 4,4'-dihydroxybenzophenone, 134 g of ethylene glycol, 96.9 g of trimethyl orthoformate, and 0.50 g of p-toluenesulfonic acid monohydrate were prepared and dissolved. Thereafter, the solution was stirred while being kept at the temperature of 78 to 82°C for 2 hours. Furthermore, the internal temperature was gradually raised up to 120°C, and the heating was continued until the distillation of methyl formate, methanol, and trimethyl orthoformate was completely stopped. The reaction liquid was cooled to room temperature, then the reaction liquid was diluted with ethyl acetate, the organic layer was washed with 100 mL of a 5% aqueous potassium carbonate solution, and after separating the solution, the solvent was distilled off. To the residue, 80 mL of dichloromethane was added to deposit crystals, and the crystals were filtered and dried to give

52.0 g of 2,2-bis(4-hydroxyphenyl)-1,3-dioxolane. The crystals were analyzed by GC to find that the crystals were 99.8% of 2,2-bis(4-hydroxyphenyl)-1,3-dioxolane and 0.2% of 4,4'-dihydroxybenzophenone.

[Chemical Formula 3]

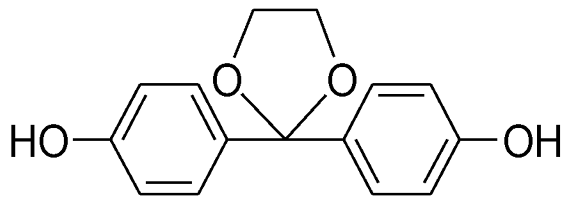

(G1)

<Synthesis Example 2>

(Synthesis of disodium-3,3'-disulfonate-4,4'-difluorobenzophenone represented by the following general formula (G2))

In 150 mL of fuming sulfuric acid (50% SO3) (Wako Pure Chemical reagent), 109.1 g of 4,4'-difluorobenzophenone (Aldrich reagent) was reacted at 100°C for 10 hours. Thereafter, the resulting product was gradually poured into a large amount of water, and neutralized with NaOH, and then 200 g of sodium chloride (NaCl) was added to the neutralized product to precipitate a synthesized product. The obtained precipitate was filtered off and recrystallized from an aqueous ethanol solution to give the disodium-3,3'-disulfonate-4,4'-difluorobenzophenone represented by the following chemical formula (G2). The purity was 99.3%.

[Chemical Formula 4]

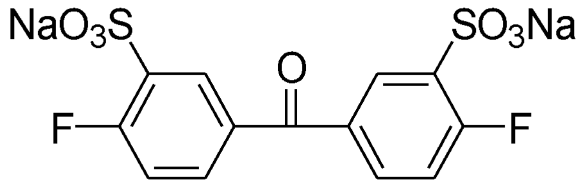

(G2)

<Synthesis Example 3>

(Synthesis of nonionic group oligomer a1 represented by the following general formula (G3))

In a 2000-mL SUS polymerizer equipped with a stirrer, a nitrogen introduction tube, and a Dean-Stark trap, 16.59 g of potassium carbonate (Aldrich reagent, 120 mmol), 25.83 g (100 mmol) of the K-DHBP obtained in Synthesis Example 1, and 20.3 g of 4,4'-difluorobenzophenone (Aldrich reagent, 93 mmol) were put. After nitrogen substitution, 300 mL of N-methylpyrrolidone (NMP) and 100 mL of toluene were added, the mixture was dehydrated at 160°C, then the temperature was raised to remove the toluene, and the rest was subjected to polymerization at 180°C for 1 hour. The resulting product was subjected to reprecipitation for purification in a large amount of methanol to give a terminal hydroxy form of a nonionic oligomer a1. The number average molecular weight of the terminal hydroxy form of the nonionic oligomer a1 was 10,000.

In a 500-mL three-necked flask equipped with a stirrer, a nitrogen introduction tube, and a Dean-Stark trap, 1.1 g of potassium carbonate (Aldrich reagent, 8 mmol) and 20.0 g (2 mmol) of the terminal hydroxy form of the nonionic oligomer a1 were put. After nitrogen substitution in the system, 100 mL of NMP and 30 mL of cyclohexane were added, the mixture was dehydrated at 100°C, and then the temperature was raised to remove the cyclohexane. Furthermore, 4.0 g of decafluorobiphenyl (Aldrich reagent, 12 mmol) was added, and the mixture was reacted at 105°C for 1 hour. The resulting product was subjected to reprecipitation for purification in a large amount of isopropyl alcohol to give the nonionic oligomer a1 (terminal: fluoro group) represented by the following general formula (G3). The number average molecular weight was 11,000.

[Chemical Formula 5]

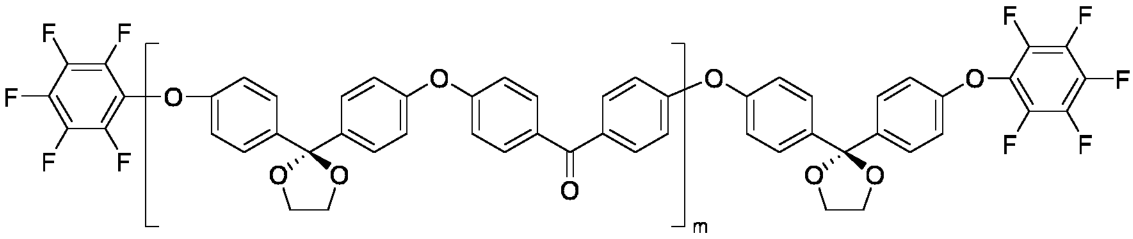

(G3)

<Synthesis Example 4>

(Synthesis of ionic oligomer a2 represented by the following general formula (G4))

In a 2,000-mL SUS polymerizer equipped with a stirrer, a nitrogen introduction tube, and a Dean-Stark trap, 27.6 g of potassium carbonate (Aldrich reagent, 200 mmol), 12.9 g (50 mmol) of the K-DHBP obtained in Synthesis Example 1, 9.3 g of 4,4'-biphenol (Aldrich reagent, 50 mmol), 40.1 g (95 mmol) of the disodium-3,3'-disulfonate-4,4'-difluorobenzophenone obtained in Synthesis Example 2, and 17.9 g of 18-crown-6 (Wako Pure Chemical Industries, Ltd., 82 mmol) were added, and after nitrogen substitution, 300 mL of NMP and 100 mL of toluene were added, the mixture was dehydrated at 150°C, the temperature was raised to remove the toluene, and the rest was subjected to polymerization at 170°C for 6 hours. The resulting product was subjected to reprecipitation for purification in a large amount of isopropyl alcohol to give the nonionic oligomer a2 (terminal: OM group) represented by the following general formula (G4). The number average molecular weight was 21,000. Further, in the formula (G4), M represents Na or K. In addition, n represents a positive integer.

[Chemical Formula 6]

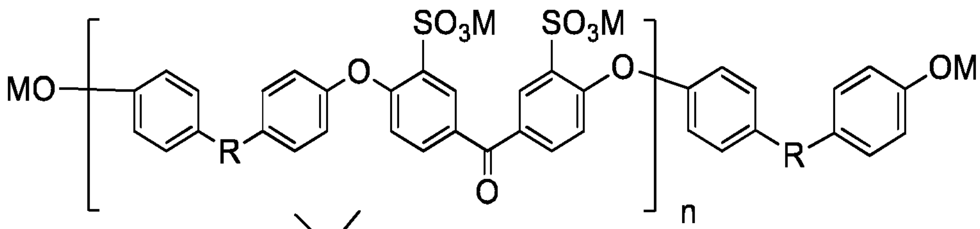

(G4)

R = 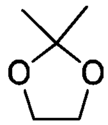 or —

<Synthesis Example 5>

(Synthesis of polyether ketone block copolymer b1)

In a 2,000-mL SUS polymerizer equipped with a stirrer, a nitrogen introduction tube, and a Dean-Stark trap, 0.56 g of potassium carbonate (Aldrich reagent, 4 mmol) and 21 g (1 mmol) of the ionic group-containing oligomer a2 (terminal: OM group) were added, and nitrogen substitution was performed. Thereafter, 100 mL of NMP and 30 mL of cyclohexane were added, and the mixture was dehydrated at 100°C, then, the temperature was raised to remove the cyclohexane, 11 g (1 mmol) of an oligomer a1' (terminal: fluoro group) containing no ionic group was put, and the mixture was reacted at 105°C for 24 hours. The resulting product was subjected to reprecipitation for purification in a large amount of isopropyl alcohol to give a block copolymer b1. The weight average molecular weight was 350,000. The ion exchange capacity of the block copolymer b1 was 2.10 meq/g.

[Preparation of Electrolyte Solution s1]

By adding 20 parts by mass of the polyether ketone block copolymer b1 to 80 parts by mass of NMP, and stirring the mixture with a stirrer at 20,000 rpm for 1 hour, a transparent solution with a polymer concentration of 20% by mass was prepared. This solution was subjected to pressure filtration with a glass fiber filter to prepare an electrolyte solution s1.

[Preparation of Electrolyte Membrane]

The electrolyte solution s1 was applied to a PET film of 350 um in thickness so as to have a dry thickness of 100 μm, dried at 150°C, further subjected to an acid treatment by immersion in a 10% by mass sulfuric acid aqueous solution at 50°C for 25 minutes, washed with water, and dried to prepare an electrolyte membrane P2.

[Preparation of Electrolyte Membrane P3]

The electrolyte solution s1 was applied to a PET film of 350 um in thickness, the following porous reinforce component (mesh woven fabric) was bonded to and impregnated with the electrolyte solution s1, and the electrolyte solution s1 was further applied onto the porous reinforce component, dried, subjected to an acid treatment by immersion in a 10% by mass sulfuric acid aqueous solution at 50°C for 25 minutes, washed with water, and dried to produce an electrolyte membrane P3. The electrolyte membrane P3 is a three-layer electrolyte membrane that has a hydrocarbon polymer electrolyte layer on each of both surfaces of a composite layer including a porous reinforce component and a hydrocarbon polymer electrolyte. The thicknesses of the respective layers were "hydrocarbon polymer electrolyte layer 1 (thickness: 33 μm)/composite layer (thickness: 35 um)/hydrocarbon polymer electrolyte layer 2 (thickness: 32 um)" from the PET film side, and the total thickness of the electrolyte membrane was 100 μm.

[Porous Reinforce Component (Mesh Woven Fabric)]

Used was a mesh woven fabric composed of liquid crystal polyester fibers produced according to Production Example 1 of International Publication WO 2019/188960.

[Catalyst-coated Electrolyte Membrane (CCM)]

- CCM1: electrolyte membrane P1 with the following anode catalyst layer and cathode catalyst layer stacked thereon
- CCM2: electrolyte membrane P2 with the following anode catalyst layer and cathode catalyst layer stacked thereon
- CCM3: electrolyte membrane P3 with the following anode catalyst layer and cathode catalyst layer stacked thereon

The catalyst-coated electrolyte membranes mentioned above were prepared in the following manner. The following anode catalyst layer and cathode catalyst layer were stacked on each of the electrolyte membranes P1 to P3 to prepare catalyst-coated electrolyte membranes. The dry thicknesses the anode catalyst layer and cathode catalyst layer were each 10 um.

<Anode Catalyst Layer>

The anode catalyst layer includes: 10 parts by mass of catalyst particles ($IrO_2$ catalyst Elyst Ir 75 0480 manufactured by Umicore (Ir content ratio: 75%); and 1 part by mass of fluoropolymer electrolyte ("Nafion" (registered trademark) product number: D2020 manufactured by The Chemours Company) in terms of solid content.

<Cathode Catalyst Layer>

The cathode catalyst layer includes: 10 parts by mass of catalyst particles (platinum catalyst-supported carbon particles TEC10E50E manufactured by Tanaka Kikinzoku Kogyo K.K., supported platinum ratio: 50% by mass); and 5 parts by mass of fluoropolymer electrolyte ("Nafion" (registered trademark) product number: D2020 manufactured by The Chemours Company) in terms of solid content.

[Preparation of Membrane Electrode Assembly]

[Example 1]

A membrane electrode assembly was prepared by disposing, as an anode electrode, the porous substrate A2 and the reticular metal component M1 in order from the electrolyte membrane side on one surface of the catalyst-coated electrolyte membrane CCM2 prepared as mentioned above, and disposing, as a cathode electrode, the porous substrate

B2 and the reticular metal component M1 in order from the electrolyte membrane side on the other surface.

[Example 2]

A membrane electrode assembly was prepared in the same manner as in Example 1, except for changing the porous substrate B2 to the porous substrate B3.

[Example 3]

A membrane electrode assembly was prepared in the same manner as in Example 1, except for changing the porous substrate A2 to the porous substrate A3.

[Example 4]

A membrane electrode assembly was prepared in the same manner as in Example 1, except for changing the porous substrate A2 to the porous substrate A3 and changing the porous substrate B2 to the porous substrate B3.

[Example 5]

A membrane electrode assembly was prepared in the same manner as in Example 1, except for changing the porous substrate A2 to the porous substrate A3 and changing the porous substrate B2 to the porous substrate B4.

[Example 6]

A membrane electrode assembly was prepared by disposing, as an anode electrode, the porous substrate A3, the reticular metal component M2, the reticular metal component M1 in order from the electrolyte membrane side on one surface of the catalyst-coated electrolyte membrane CCM2 prepared as mentioned above, and disposing, as a cathode electrode, the porous substrate B4, the reticular metal component M2, and the reticular metal component M1 in order from the electrolyte membrane side on the other surface.

[Example 7]

A membrane electrode assembly was prepared by disposing, as an anode electrode, the porous substrate A3 on one surface of the catalyst-coated electrolyte membrane CCM2 prepared as mentioned above, and disposing, as a cathode electrode, the porous substrate B4 on the other surface.

[Example 8]

A membrane electrode assembly was prepared by disposing, as an anode electrode, the porous substrate A3 and the reticular metal component M1 in order from the electrolyte membrane side on one surface of the catalyst-coated electrolyte membrane CCM1 prepared as mentioned above, and disposing, as a cathode electrode, the porous substrate B4 and the reticular metal component M1 in order from the electrolyte membrane side on the other surface.

[Example 9]

A membrane electrode assembly was prepared in the same manner as in Example 8, except for changing the catalyst-coated electrolyte membrane CCM1 to CCM3.

[Comparative Example 1]

A membrane electrode assembly was prepared in the same manner as in Example 1, except for changing the porous substrate A2 to the porous substrate A1 and changing the porous substrate B2 to B1.

[Comparative Example 2]

A membrane electrode assembly was prepared by disposing, as an anode electrode, the porous substrate A1 on one surface of the catalyst-coated electrolyte membrane CCM2 prepared as mentioned above, and disposing, as a cathode electrode, the porous substrate B1 on the other surface.

[Comparative Example 3]

A membrane electrode assembly was prepared in the same manner as in Comparative Example 1, except for changing the catalyst-coated electrolyte membrane CCM2 to CCM1.

[Comparative Example 4]

A membrane electrode assembly was prepared in the same manner as in Comparative Example 1, except for changing the catalyst-coated electrolyte membrane CCM2 to CCM3.

[Comparative Example 5]

A membrane electrode assembly was prepared in the same manner as in Comparative Example 1, except for changing the porous substrate B1 to B2.

[Comparative Example 6]

A membrane electrode assembly was prepared in the same manner as in Comparative Example 1, except for changing the porous substrate A1 to A2.

[Evaluation of Membrane Electrode Assembly]

The membrane electrode assemblies according to the examples and the comparative examples, prepared as mentioned above, were evaluated for water electrolysis performance and water electrolysis durability by the above-described evaluation method. In the evaluation, the separator 2 with the flow path groove was used for the membrane electrode assemblies according to Example 7 and Comparative Example 2 because no flow path forming components (reticular metal component) were included in the assemblies, whereas the separator 1 was used for the other examples and comparative examples. The types of the respective components and the evaluation results are shown together in Table 1.

[Table 1-1]

| | Separator on anode electrode side | Membrane electrode assembly | | | | | | | | | |
|---|---|---|---|---|---|---|---|---|---|---|---|
| | | Anode electrode | | | | Catalyst-coated electrolyte membrane | | Cathode electrode | | | |
| | | Reticular metal component | | Porous substrate (A) | | CCM | Electrolyte membrane | Porous substrate (B) | | Reticular metal component | |
| | Type | Type | Mesh count | Type | Thickness (μm) | Type | Type | Type | Thickness (μm) | Type | Mesh count |
| Example 1 | 2 | M1 | 25 | A2 | 550 | 2 | P2 | B2 | 560 | M1 | 25 |
| Example 2 | 2 | M1 | 25 | A2 | 550 | 2 | P2 | B3 | 820 | M1 | 25 |
| Example 3 | 2 | M1 | 25 | A3 | 750 | 2 | P2 | B2 | 560 | M1 | 25 |
| Example 9 | 2 | M1 | 25 | A3 | 750 | 2 | P2 | B3 | 820 | M1 | 25 |
| Example 5 | 2 | M1 | 25 | A3 | 750 | 2 | P2 | H9 | 1,350 | M1 | 25 |
| Example 6 | 2 | M2 + M1 | 60/25 | A3 | 750 | 2 | P2 | B4 | 1,350 | M2 + M1 | 60/25 |
| Example 7 | 1 | - | - | A3 | 750 | 2 | P2 | B4 | 1,350 | - | - |
| Example 8 | 2 | M1 | 25 | A3 | 750 | 1 | P1 | H9 | 1,350 | M1 | 25 |
| Example 9 | 2 | M1 | 25 | A3 | 750 | 3 | P3 | H9 | 1,350 | M1 | 25 |
| Comparative Example 1 | 2 | M1 | 25 | A1 | 300 | 2 | P2 | H1 | 370 | M1 | 25 |
| Comparative Example 2 | 1 | - | - | A1 | 300 | 2 | P2 | H1 | 370 | - | - |
| Comparative Example 3 | 2 | M1 | 25 | A1 | 300 | 1 | P1 | H1 | 370 | M1 | 25 |
| Comparative Example 9 | 2 | M1 | 25 | A1 | 300 | 3 | P3 | H1 | 370 | M1 | 25 |
| Comparative Example 5 | 2 | M1 | 25 | A1 | 300 | 2 | P2 | B2 | 560 | M1 | 25 |
| Comparative Example 6 | 2 | M1 | 25 | A2 | 550 | 2 | P2 | H1 | 370 | M1 | 25 |

[Table 1-2]

| | Separator on cathode electrode side | Total thickness of porous substrate (A) and porous substrate (B) (μm) | Evaluation | |
|---|---|---|---|---|
| | Type | | Applied voltage (V) | Increase in voltage (V) |
| Example 1 | 2 | 1,110 | 1.73 | 0.16 |
| Example 2 | 2 | 1,370 | 1.74 | 0.10 |
| Example 3 | 2 | 1,310 | 1.75 | 0.13 |
| Example 9 | 2 | 1,570 | 1.73 | 0.12 |
| Example 5 | 2 | 2,100 | 1.71 | 0.05 |
| Example 6 | 2 | 2,100 | 1.73 | 0.02 |
| Example 7 | 1 | 2,100 | 1.69 | 0.15 |
| Example 8 | 2 | 2,100 | 1.73 | 0.05 |
| Example 9 | 2 | 2,100 | 1.73 | 0.03 |
| Comparative Example 1 | 2 | 670 | 1.83 | 0.22 |
| Comparative Example 2 | 1 | 670 | 1.78 | 0.35 |
| Comparative Example 3 | 2 | 670 | 1.78 | 0.18 |
| Comparative Example 9 | 2 | 670 | 1.86 | 0.32 |
| Comparative Example 5 | 2 | 860 | 1.78 | 0.18 |
| Comparative Example 6 | 2 | 920 | 1.80 | 0.20 |

DESCRIPTION OF REFERENCE SIGNS

1: Electrolyte membrane
10: Anode electrode
11: Porous substrate (A)
12, 22: Reticular component
13, 23: Non-reticular porous component
20: Cathode electrode
21: Porous substrate (B)
100, 200, 300, 400: Membrane electrode assembly
L: Reference line
M: Dimension of (opening size + wire diameter)

**Claims**

**1.** A membrane electrode assembly comprising an anode electrode on one surface of an electrolyte membrane and a cathode electrode on the other surface thereof,

wherein the anode electrode includes a porous substrate (A),

the cathode electrode includes a porous substrate (B), and
the porous substrate (A) and the porous substrate (B) has a total thickness more than 1,000 μm.

**2.** The membrane electrode assembly according to claim 1, wherein

the porous substrate (A) has a thickness more than 400 um, and
the porous substrate (B) has a thickness more than 500 μm.

**3.** The membrane electrode assembly according to claim 1 or 2, wherein

the porous substrate (A) includes a metal porous substrate, and
the porous substrate (B) includes a metal porous substrate and/or a carbon porous substrate.

**4.** The membrane electrode assembly according to claim 3, wherein a metal of the metal porous substrate is at least one selected from the group consisting of titanium, aluminum, nickel, stainless steel, and an alloy containing at least one metal thereof as a main constituent.

**5.** The membrane electrode assembly according to any one of claims 1 to 4, wherein the anode electrode includes a reticular component on a side of the porous substrate (A) opposite to the electrolyte membrane.

**6.** The membrane electrode assembly according to any one of claims 1 to 5, wherein the cathode electrode includes a reticular component on a side of the porous substrate (B) opposite to the electrolyte membrane.

**7.** The membrane electrode assembly according to claim 5 or 6, wherein the reticular component is a reticular metal component.

**8.** The membrane electrode assembly according to claim 7, wherein a metal constituting the reticular metal component is at least one selected from the group consisting of titanium, nickel, aluminum, stainless steel, and an alloy containing at least one metal thereof as a main constituent.

**9.** The membrane electrode assembly according to any one of claims 1 to 8, wherein the electrolyte membrane includes a hydrocarbon polymer electrolyte.

**10.** The membrane electrode assembly according to any one of claims 1 to 9, wherein the electrolyte membrane includes a porous reinforce component.

**11.** The membrane electrode assembly according to any one of claims 1 to 10, wherein the electrolyte membrane is a catalyst-coated electrolyte membrane.

**12.** The membrane electrode assembly according to claim 11, wherein the catalyst-coated electrolyte membrane has an anode catalyst layer on an anode electrode side of the electrolyte membrane and a cathode catalyst layer on a cathode electrode side of the electrolyte membrane.

**13.** The membrane electrode assembly according to claim 12, wherein

the anode catalyst layer contains an iridium oxide and a fluoropolymer electrolyte, and
the cathode catalyst layer contains platinum supported carbon particles and a fluoropolymer electrolyte.

**14.** The membrane electrode assembly according to any one of claims 1 to 13, wherein the membrane electrode assembly is for a water electrolyzer.

**15.** A water electrolyzer comprising the membrane electrode assembly according to any one of claims 1 to 14.

FIG. 1

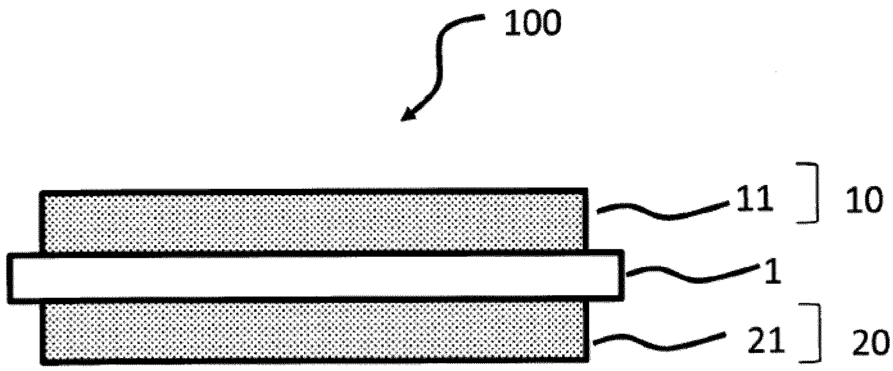


FIG. 2

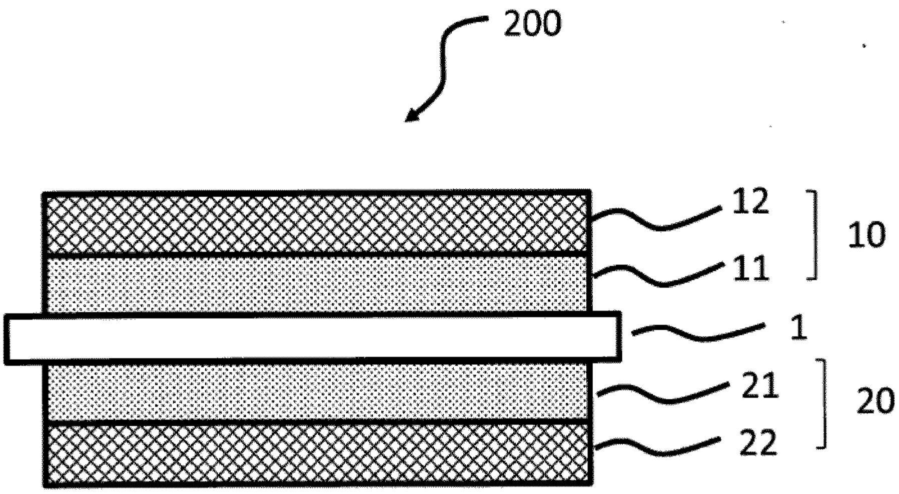

FIG. 3

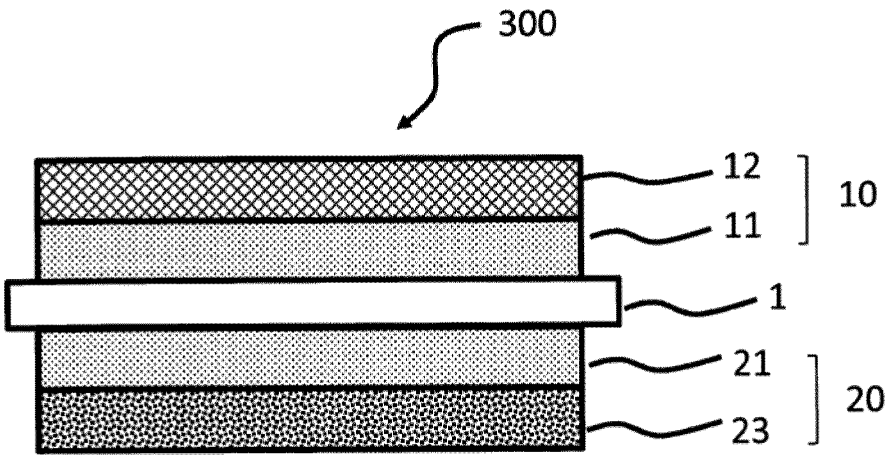


FIG. 4

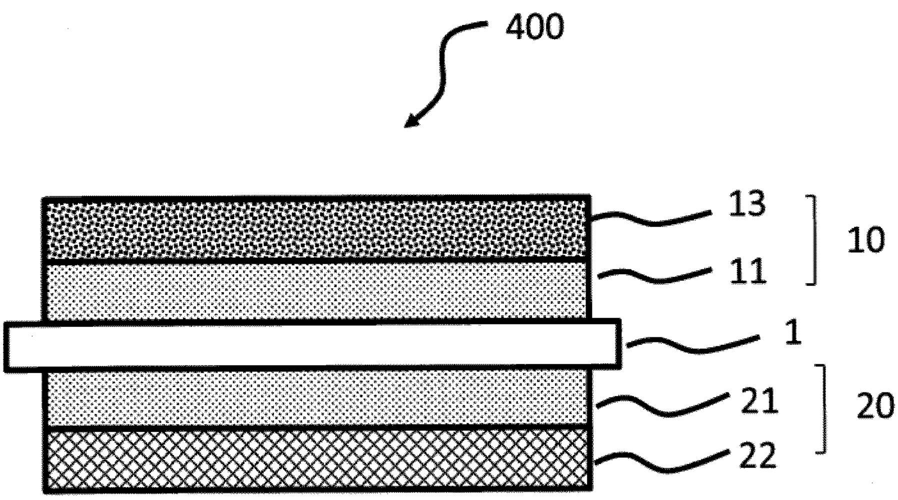

FIG. 5

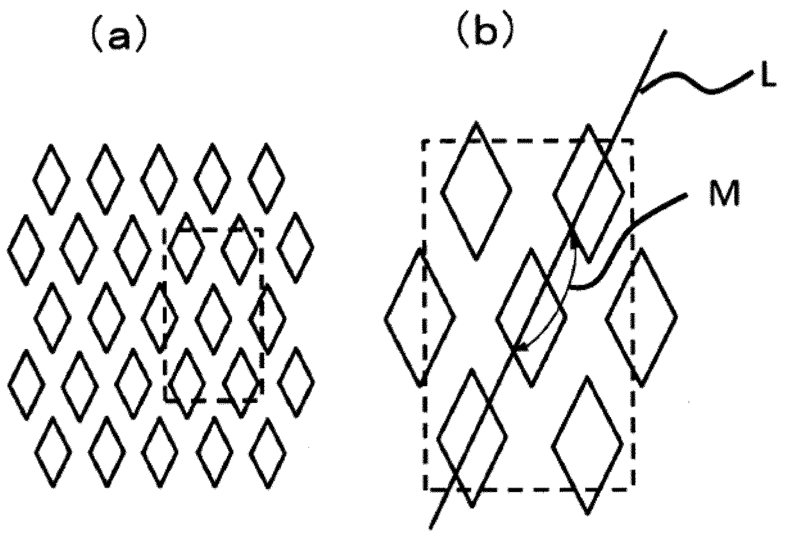

**INTERNATIONAL SEARCH REPORT**

International application No.
**PCT/JP2022/038692**

**A. CLASSIFICATION OF SUBJECT MATTER**

***C25B 9/23***(2021.01)i; ***C02F 1/461***(2023.01)i; ***C25B 1/04***(2021.01)i; ***C25B 9/00***(2021.01)i; ***C25B 11/032***(2021.01)i; ***C25B 11/043***(2021.01)i; ***C25B 11/046***(2021.01)i; ***C25B 11/052***(2021.01)i; ***C25B 11/061***(2021.01)i; ***C25B 11/063***(2021.01)i; ***C25B 11/081***(2021.01)i; ***C25B 13/02***(2006.01)i; ***C25B 13/08***(2006.01)i; ***H01M 4/86***(2006.01)i; ***H01M 4/96***(2006.01)i; ***H01M 8/0656***(2016.01)i; ***H01M 8/10***(2016.01)i; ***H01M 8/1004***(2016.01)i; ***H01M 8/1058***(2016.01)i

FI: C25B9/23; C25B9/00 A; C25B1/04; C25B11/032; C25B11/061; H01M8/0656; C25B11/063; C25B11/052; C25B11/081; C02F1/461 Z; H01M4/96 M; H01M4/86 B; H01M8/10 101; H01M8/1004; H01M4/96 B; H01M8/1058; C25B13/02 301; C25B13/08 301; C25B11/043; C25B11/046

According to International Patent Classification (IPC) or to both national classification and IPC

**B. FIELDS SEARCHED**

Minimum documentation searched (classification system followed by classification symbols)

C25B9/23; C02F1/461; C25B1/04; C25B9/00; C25B11/032; C25B11/043; C25B11/046; C25B11/052; C25B11/061; C25B11/063; C25B11/081; C25B13/02; C25B13/08; H01M4/86; H01M4/96; H01M8/0656; H01M8/10; H01M8/1004; H01M8/1058

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2004-315933 A (KOBELCO ECO-SOLUTIONS CO LTD) 11 November 2004 (2004-11-11)<br>paragraphs [0015]-[0037], fig. 1, 2 | 1, 3-8, 14, 15 |
| X | WO 2018/139609 A1 (ASAHI KASEI KABUSHIKI KAISHA) 02 August 2018 (2018-08-02)<br>paragraphs [0085]-[0099], [0116], [0146]-[0153], [0157], fig. 2 | 1-12, 14, 15 |
| X | JP 2008-274326 A (CHLORINE ENGINEERS CORP., LTD.) 13 November 2008 (2008-11-13)<br>paragraphs [0016], [0030], [0032], fig. 1 | 1-4, 9, 11-15 |
| A | JP 2005-501177 A (ENGEN GROUP, INC.) 13 January 2005 (2005-01-13)<br>paragraphs [0077]-[0103] | 1-15 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 December 2022** | **27 December 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/038692**

**C. DOCUMENTS CONSIDERED TO BE RELEVANT**

| Category* | Citation of document, with indication, where appropriate, of the relevant passages | Relevant to claim No. |
|---|---|---|
| A | JP 2001-279479 A (SHINKO PANTEC CO LTD) 10 October 2001 (2001-10-10) paragraphs [0037]-[0045], fig. 1-4 | 1-15 |

Form PCT/ISA/210 (second sheet) (January 2015)

**INTERNATIONAL SEARCH REPORT**
**Information on patent family members**

International application No.
**PCT/JP2022/038692**

| Patent document cited in search report | Publication date (day/month/year) | Patent family member(s) | Publication date (day/month/year) |
|---|---|---|---|
| JP 2004-315933 A | 11 November 2004 | (Family: none) | |
| WO 2018/139609 A1 | 02 August 2018 | EP 3575444 A1<br>paragraphs [0114]-[0135], [0160], [0200]-[0214], [0220]-[0222], fig. 2 | |
| JP 2008-274326 A | 13 November 2008 | US 2008/0264780 A1<br>paragraphs [0025], [0042], [0043], [0051], [0052], fig. 1<br>EP 1985727 A1<br>KR 10-2008-0096408 A | |
| JP 2005-501177 A | 13 January 2005 | US 2003/0047459 A1<br>paragraphs [0087]-[0111]<br>WO 2003/018469 A1<br>EP 1434734 A1 | |
| JP 2001-279479 A | 10 October 2001 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11256380 A
- JP 2001279479 A
- WO 2019188960 A